(19) Europäisches Patentamt
European Patent Office
Office européen des brevets

(11) **EP 2 984 335 B1**

(12) **EUROPÄISCHE PATENTSCHRIFT**

(45) Veröffentlichungstag und Bekanntmachung des Hinweises auf die Patenterteilung:
**04.07.2018  Patentblatt 2018/27**

(21) Anmeldenummer: **14708806.6**

(22) Anmeldetag: **05.03.2014**

(51) Int Cl.:
*F03D 7/02* *(2006.01)*       *F03D 17/00* *(2016.01)*

(86) Internationale Anmeldenummer:
**PCT/EP2014/000563**

(87) Internationale Veröffentlichungsnummer:
**WO 2014/139645 (18.09.2014 Gazette 2014/38)**

(54) **VERFAHREN UND SYSTEM ZUR ÜBERWACHUNG EINER EINZELBLATTVERSTELLUNG EINER WINDENERGIEANLAGE**

METHOD AND SYSTEM FOR MONITORING AN INDIVIDUAL BLADE ADJUSTMENT OF A WIND TURBINE

PROCÉDÉ ET SYSTÈME DESTINÉS À SURVEILLER LE PAS INDIVIDUEL DES PALES D'UNE ÉOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **14.03.2013   DE 102013204492**

(43) Veröffentlichungstag der Anmeldung:
**17.02.2016   Patentblatt 2016/07**

(73) Patentinhaber: **Senvion GmbH**
**22297 Hamburg (DE)**

(72) Erfinder:
• **WARFEN, Karsten**
**23795 Söhren (DE)**
• **HENDUS, Lothar**
**24105 Kiel (DE)**
• **BILGES, Sören**
**22761 Hamburg (DE)**
• **LEWEKE, Henning**
**24226 Heikendorf (DE)**

(74) Vertreter: **Wallinger Ricker Schlotter Tostmann Patent- und Rechtsanwälte mbB**
**Zweibrückenstraße 5-7**
**80331 München (DE)**

(56) Entgegenhaltungen:
DE-A1-102009 022 236     US-A1- 2008 290 664
US-A1- 2011 158 805

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren und ein System zur Überwachung einer Einzelblattverstellung einer Windenergieanlage, die einen Turm, einen auf dem Turm angeordneten Rotor mit wenigstens zwei individuell blattwinkelverstellbaren Rotorblättern und ein Blattverstellsystem umfasst, wobei das Blattverstellsystem eine Blattsteuerung und Sensoren zur Erfassung von individuellen Ist-Blattwinkeln der wenigstens zwei Rotorblätter umfasst, wobei eine Einzelblattsteuerung umfasst ist, die von der Blattsteuerung einen kollektiven Soll-Blattwinkel erhält und die wenigstens zwei Rotorblätter mit jeweils individuellen Soll-Blattwinkeln ansteuert, sowie eine entsprechende Windenergieanlage.

Windenergieanlagen mit Leistungsregelung durch Rotorblattverstellung haben Einrichtungen, die die korrekte Stellung der einzelnen Rotorblätter unter anderem auf Symmetrie und Regelabweichungen überwachen. Es müssen ferner Störungsfälle erkannt werden, wie beispielsweise das unkontrollierte und willkürliche Verstellen einer oder mehrerer Rotorblätter. Bei Regelungskonzepten mit Einzelblattverstellung, also unabhängiger Verstellung der einzelnen Rotorblätter, werden gewollt große Asymmetrien erzeugt. Dies stellt besondere Herausforderungen an die Überwachung der Einzelblattverstellung.

Hierzu werden üblicherweise die Soll-Werte der Blattwinkel als Stellgröße und die Ist-Werte als Messwerte der üblicherweise zwei oder drei, in Einzelfällen kleinerer Anlagen auch mehr, einzelnen Rotorblattwinkel auf Abweichungen überwacht. Weiterhin werden die Asymmetrien durch Vergleich der einzelnen Ist-Werte der individuellen Blattwinkel auf Abweichungen zueinander überwacht. Schließlich werden absolute Grenzen der Rotorblattwinkel, üblicherweise Minimalwerte, auf Überschreitungen überwacht. Diese Überwachungen führen bei Auslösung zum Stillsetzen der Windenergieanlage.

Besonders für große Offshore-Anlagen oder bei hohen Offshore-Türmen wird es zunehmend wichtig, eine Einzelblattverstellung oder "individual pitch control" (IPC) zur Reduktion der mechanischen Lasten zu verwenden. In der IPC werden relativ starke BlattwinkelAsymmetrien erzeugt. Eine Lockerung der Überwachungs-Einstellungen in Amplitude und Zeit bei den bisher genutzten Überwachungsverfahren für symmetrische Blattansteuerungen würde zu inakzeptablen Erhöhungen von mechanischen Lasten bei bestimmten Situationen bzw. Lastfällen führen. US2011/0158805 A1 und DE102009022236 A1 weisen Steuersysteme mit Blattverstellung aus dem Stand der Technik auf. Gegenüber diesem Stand der Technik liegt der vorliegenden Erfindung die Aufgabe zugrunde, ein Verfahren und ein System zur Überwachung einer Einzelblattverstellung einer Windenergieanlage sowie eine entsprechende Windenergieanlage zur Verfügung zu stellen, die auf einfache Weise einen sicheren und effizienten Betrieb der Windenergieanlage mit Einzelblattverstellung ermöglichen.

Diese Aufgabe wird durch ein Verfahren zur Überwachung einer Einzelblattverstellung einer Windenergieanlage, die einen Turm, einen auf dem Turm angeordneten Rotor mit wenigstens zwei individuell blattwinkelverstellbaren Rotorblättern und ein Blattverstellsystem umfasst, wobei das Blattverstellsystem eine Blattsteuerung und Sensoren zur Erfassung von individuellen Ist-Blattwinkeln der wenigstens zwei Rotorblätter umfasst, wobei eine Einzelblattsteuerung umfasst ist, die von der Blattsteuerung einen kollektiven Soll-Blattwinkel erhält und die wenigstens zwei Rotorblätter mit jeweils individuellen Soll-Blattwinkeln ansteuert, gelöst, das dadurch weitergebildet ist, dass wenigstens ein Differenzsignal durch Differenzbildung zwischen wenigstens zwei untereinander verschiedenen Blattwinkel-Kollektivsignalen gebildet und auf eine betragsmäßige Überschreitung wenigstens eines Grenzwerts hin überwacht wird, wobei das wenigstens eine zu überwachende Differenzsignal und/oder die der Differenzbildung zugrunde liegenden Blattwinkel-Kollektivsignale und/oder die einem oder den Blattwinkel-Kollektivsignalen zugrunde liegenden individuellen Blattwinkelsignale zeitlich gemittelt wird oder werden.

Im Gegensatz zum Stand der Technik werden somit nicht mehr jeweils die Einzelsignale überwacht, sondern es werden Kollektivsignale gebildet bzw. verwendet, die einen Zustand des Kollektivs der Rotorblätter beschreiben, und zwar auf der Ist-Seite und/oder auf der Soll-Seite. Zusätzlich wird zeitlich gemittelt, um turbulente Störungen oder Messfehler auszugleichen. Die zeitliche Mittelung kann an den Ursprungssignalen, am Differenzsignal oder an Zwischensignalen wie dem Ist-Mittelwert oder dem Soll-Mittelwert ansetzen.

Diese Überwachung beruht auf dem Grundgedanken, dass die Einzelblattverstellung (IPC) zwar relativ starke Blattwinkelasymmetrien erzeugt, wobei diese Asymmetrien von Blatt zu Blatt mit nahezu gleicher Phase verschoben sind, die jeweiligen Mittelwerte der zwei, drei oder mehr Soll-Winkel und der Ist-Winkel müssen aber gleich sein bzw. dürfen nur entsprechend der Trägheit bzw. der Verzögerungszeiten des Blattwinkelverstellsystems voneinander abweichen.

Ebenfalls kann der kollektive Soll-Blattwinkel aus der Blattsteuerung als Kollektivsignal beispielsweise mit dem Mittelwert der Ist-Blattwinkel oder der Soll-Blattwinkel aus der Einzelblattverstellung (IPC) verglichen werden, um verschiedene Störungszustände zu überprüfen.

Vorzugsweise werden als Blattwinkel-Kollektivsignale ein Ist-Mittelwert der Ist-Blattwinkel, ein Soll-Mittelwert von einzelblattsteuerungsbasierten individuellen Blattwinkeln und/oder der kollektive Soll-Blattwinkel verwendet. So dient ein Vergleich des Ist-Mittelwerts mit dem Soll-Mittelwert von einzelblattsteuerungsbasierten individuellen Blattwinkeln der Überprüfung der mechanischen Komponenten des Verstellsystems, beispielsweise Pitchantrieben und Blattlagern. Ein Vergleich des Soll-Mittelwerts mit dem kollektiven Soll-Blattwinkel, der von der Blattsteuerung ausgegeben wird, dient der Überprüfung der Funktion der IPC. Ein Pitchantrieb oder Blattverstellantrieb umfasst üblicherweise einen oder mehrere Motoren, Getriebe, Ritzel, das oder die in eine Verzahnung am Blattlager kämmt oder kämmen, und eine Bremse.

Vorzugsweise wird zur Berechnung des Soll-Mittelwerts über die individuellen Soll-Blattwinkel der Einzelblattsteuerung gemittelt und/oder eine Antwort des Blattverstellsystems auf die angeforderten individuellen Soll-Blattwinkel simuliert und über die simulierten individuellen Blattwinkel des simulierten Blattverstellsystems gemittelt.

Im ersten Fall findet eine einfache Mittelung der individuellen Soll-Blattwinkel aus der IPC statt, mit denen insbesondere entweder der Ist-Mittelwert oder der kollektive Soll-Blattwinkel zur Überprüfung der mechanischen Komponenten oder der IPC selbst vorgenommen wird. Hierzu werden die entsprechenden Grenzwerte so eingestellt, dass die üblichen Zeitverzögerungen des Verstellsystems berücksichtigt werden.

Eine noch empfindlichere Parametrierung der Überwachung ergibt sich, wenn das Blattverstellsystem modellhaft abgebildet und simuliert wird und auf der Grundlage der Simulation der Soll-Mittelwert ermittelt wird. Diese Simulation berücksichtigt bereits die Trägheit des Verstellsystems. Auf diese Weise wird die zeitliche Verzögerung der Blattwinkelverstellung nach der jeweiligen Anforderung veränderter individueller Blattwinkel bereits in der Berechnung des Soll-Mittelwerts von einzelblattsteuerungsbasierten individuellen Blattwinkeln berücksichtigt. In diesem Fall können die Grenzwerte entsprechend enger definiert werden. Wenn das Verstellsystem in diesem Fall Verzögerungen gegenüber dem simulierten Fall aufweist, kann somit auf empfindliche Weise eine Fehlfunktion der mechanischen Komponenten festgestellt werden, also beispielsweise der Verstellantriebe und Blattlager. Die Simulation kann im Rahmen der Erfindung bei ordnungsgemäßem Betrieb optimiert werden. Dabei kann die Antwort des Verstellsystems auf Verstellanfragen durch Messung der Antwortzeiten und Antwortgeschwindigkeiten laufend an das reale System angepasst werden.

Die zeitliche Mittelung oder Mittelungen erfolgt oder erfolgen vorzugsweise über eine Mittelungsdauer, die weniger als eine Dauer einer halben Rotorumdrehung beträgt, insbesondere zwischen 0,5 Sekunden und 2 Sekunden, insbesondere vorzugsweise 1 Sekunde. Diese Mittelungsdauer ist lang genug, um das dynamische Verhalten des Systems auszugleichen und kurz genug, um eine Erkennung von Fehlfunktionen der mechanischen Komponenten des Verstellsystems oder der IPC selbst zu erkennen. Solche Lastfälle treten überwiegend nur kurzzeitig auf, so dass eine längere Mittelungsdauer dazu führen würde, dass diese nicht mehr erkannt werden.

Vorzugsweise wird der Betrieb der Windenergieanlage lastreduziert oder angehalten, wenn das wenigstens eine erzeugte Blattwinkeldifferenzsignal den wenigstens einen Grenzwert betragsmäßig überschreitet. So kann auf den entdeckten Lastfall situationsgerecht reagiert werden. Das Ausmaß der Lastreduktion oder die Entscheidung, dass der Betrieb der Windenergieanlage angehalten wird, kann dabei von der Art und von der Schwere des entdeckten Lastfalls abhängig gemacht werden.

In einer bevorzugten Ausführungsform wird ein Differenzsignal aus dem kollektiven Ist-Mittelwert und dem kollektiven Soll-Mittelwert erzeugt und bei einer betragsmäßigen Überschreitung eines Grenzwerts eine Fehlfunktion eines Blattverstellantriebs oder eines Blattlagers festgestellt. Dieser Fall entspricht einer Fehlfunktion der Mechanik, also der Blattverstellantriebe oder Blattlager, des Blattverstellsystems. Dabei kann der kollektive Soll-Mittelwert entweder der Mittelwert der individuellen Soll-Einzelblattwinkel sein oder ein Mittelwert der simulierten individuellen Blattwinkel als Antwort auf die Soll-Einzelblattwinkel.

In einer alternativen oder zusätzlichen Überwachung ist ebenfalls vorteilhafterweise vorgesehen, dass ein Differenzsignal aus dem kollektiven Soll-Mittelwert und dem kollektiven Soll-Blattwinkel erzeugt wird und bei einer betragsmäßigen Überschreitung eines Grenzwerts eine Fehlfunktion der Einzelblattsteuerung festgestellt wird. In diesem Fall ist der kollektive Soll-Mittelwert vorzugsweise der Mittelwert der Soll-Einzelblattwinkel aus der IPC. Da in diesem Fall zwei Soll-Werte miteinander verglichen werden, wird durch diese Maßnahme die Verzögerung der mechanischen Komponenten des Blattverstellsystems ignoriert.

Durch die zuletzt genannte Überwachung werden Fehlberechnungen der blattindividuellen Stellgrößen durch den IPC-Regler erkannt. Es handelt sich im Prinzip um eine Überwachung der Symmetrie der individuellen Soll-Werte, die innerhalb eines begrenzten Bands immer gegeben sein muss. Die beiden Überwachungen können auch zu einer kombiniert werden, wobei auch der Ist-Mittelwert mit dem kollektiven Soll-Blattwinkel verglichen werden kann. Mit dieser Überwachung werden gleichzeitig die mechanischen Komponenten und die Funktionsweise des IPC-Reglers überwacht.

In einer weiteren alternativen oder zusätzlichen vorteilhaften Überwachung wird vorzugsweise ein Differenzsignal aus dem kollektiven Soll-Blattwinkel und dem kollektiven Ist-Mittelwert erzeugt und bei einer betragsmäßigen Überschreitung eines Grenzwerts eine Fehlfunktion in der Einzelblattverstellung festgestellt. Auf diese Weise werden in einer einzigen Prüfabfrage alle Einzelabfragen zusammengefasst, wobei dies auf Kosten einer teilsystemspezifischen Fehleranalyse geht. Alle beschriebenen Überwachungen können einzeln oder, insbesondere bedarfsweise, in jeglicher Kombination sinnvoll in einem erfindungsgemäßen Überwachungsverfahren implementiert werden.

Die Überwachung nach dem erfindungsgemäßen Verfahren ermöglicht es, den normalen Produktionsbetrieb und Berücksichtigung üblicher Toleranzen von bestimmten Zuständen des Produktionsbetriebes mit fehlerhafter Blattverstellaktivität deutlich schneller als bisher zu unterscheiden. Unter anderem kann ein willkürliches Verfahren einzelner, insbesondere zweier, Blätter in Richtung 0°-Blattwinkel mehrere 100 ms schneller erkannt werden als bisher. Diese Überwachung trägt dazu bei, dass die in der IPC-Entwicklung betrachteten Anlagentypen weitestgehend ohne kritische Veränderung in den Extremlasten betrieben werden können.

Nicht nur der Fall eines willkürlich verfahrenen Rotorblatts wird mit der Methode besser überwacht, sondern die generelle Eigenschaft des IPC-Betriebs. Regelungstechnisch muss bei Einzelblattverstellung die hier berechnete Differenz die Zielgröße 0 (Null) haben.

Durch die Aufteilung in zwei Überwachungen kann bei Auslösung differenziert werden zwischen einer Fehlfunktion des Reglers oder einer des Antriebssystems. Die Auslösekriterien, die Mittelungszeit und Auslöseverzögerung können so individuell gut angepasst werden.

Die der Erfindung zugrundeliegende Aufgabe wird auch durch ein System zur Überwachung einer Einzelblattverstellung einer Windenergieanlage gelöst, die einen Turm, einen auf dem Turm angeordneten Rotor mit wenigstens zwei individuell blattwinkelverstellbaren Rotorblättern und ein Blattverstellsystem umfasst, wobei das Blattverstellsystem eine Blattsteuerung und Blattwinkelsensoren zur Erfassung von individuellen Ist-Blattwinkeln der wenigstens zwei Rotorblätter umfasst, wobei die Blattsteuerung eine Einzelblattsteuerung umfasst, die von der Blattsteuerung einen kollektiven Soll-Blattwinkel erhält und die wenigstens zwei Rotorblätter mit jeweils individuellen Soll-Blattwinkeln ansteuert, wobei das System eine Überwachungsvorrichtung aufweist, das dadurch weitergebildet ist, dass die Überwachungsvorrichtung ausgebildet und eingerichtet ist, wenigstens ein Differenzsignal durch Differenzbildung zwischen wenigstens zwei untereinander verschiedenen Blattwinkel-Kollektivsignalen zu bilden und auf eine betragsmäßige Überschreitung wenigstens eines Grenzwerts hin zu überwachen und das wenigstens eine zu überwachende Differenzsignal und/oder die der Differenzbildung zugrunde liegenden Blattwinkel-Kollektivsignale ($\overline{\vartheta^{act}}$, $\overline{\vartheta^{IPC}}$, $\vartheta_c^{set}$) und/oder die einem oder den Blattwinkel-Kollektivsignalen ($\overline{\vartheta^{act}}$, $\overline{\vartheta^{IPC}}$) zugrunde liegenden individuellen Blattwinkelsignale ($\vartheta_i^{act}$, $\vartheta_i^{IPC}$, $\vartheta_i^{sim}$) zeitlich zu mitteln.

Mit dieser Definition leistet das System das gleiche wie das erfindungsgemäße Verfahren und teilt dessen Merkmale, Vorzüge und Eigenschaften. Dazu weist die Überwachungsvorrichtung vorzugsweise Mittel auf, ist ausgebildet und eingerichtet, ein erfindungsgemäßes zuvor beschriebenes Verfahren auszuführen.

Die Überwachungsvorrichtung ist vorteilhafterweise in eine Betriebsführung oder in das Blattverstellsystem der Windenergieanlage integriert.

Schließlich wird die der Erfindung zugrundeliegende Aufgabe auch durch eine Windenergieanlage mit einem Turm, einem auf dem Turm angeordneten Rotor mit wenigstens zwei individuell blattwinkelverstellbaren Rotorblättern und einem Blattverstellsystem, das eine Blattsteuerung und Blattwinkelsensoren zur Erfassung von individuellen Ist-Blattwinkeln der wenigstens zwei Rotorblätter umfasst, wobei die Blattsteuerung eine Einzelblattsteuerung umfasst, die von der Blattsteuerung einen kollektiven Soll-Blattwinkel erhält und die wenigstens zwei Rotorblätter mit jeweils individuellen Soll-Blattwinkeln ansteuert, gelöst, die dadurch weitergebildet ist, dass sie ein erfindungsgemäßes zuvor beschriebenes System zur Überwachung der Einzelblattverstellung aufweist.

Auch die Windenergieanlage weist somit die Eigenschaften, Vorteile und Merkmale des zuvor beschriebenen erfindungsgemäßen Verfahrens und des erfindungsgemäßen Systems auf.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:

Fig. 1    eine schematische Darstellung einer Windenergieanlage,

Fig. 2    eine schematische Darstellung eines ersten Ausführungsbeispiels eines erfindungsgemäßen Überwachungsschemas,

Fig. 3    eine schematische Darstellung eines zweiten Ausführungsbeispiels eines erfindungsgemäßen Überwachungsschemas und

Fig. 4    eine schematische Darstellung eines dritten Ausführungsbeispiels eines erfindungsgemäßen Überwachungsschemas.

In den Zeichnungen sind jeweils gleiche oder gleichartige Elemente und/oder Teile mit denselben Bezugsziffern versehen, so dass von einer erneuten Vorstellung jeweils abgesehen wird.

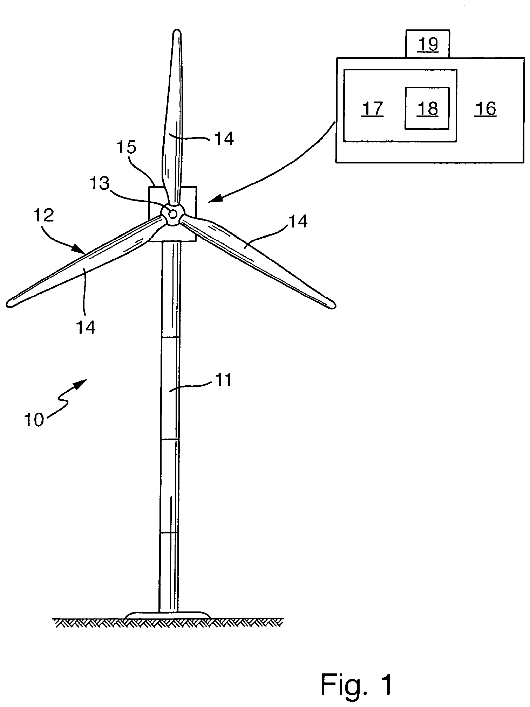

Fig. 1 zeigt eine schematische Darstellung einer Windenergieanlage 10. Die Windenergieanlage 10 weist einen Turm 11 und einen Rotor 12 auf, der drei Rotorblätter 14 umfasst, die auf einer Rotornabe 13 angebracht sind. Die Rotornabe 13 treibt einen Generator (nicht dargestellt) an, der in einer Gondel 15 an der Spitze des Turms 11 angeordnet ist. Bei Windeinfall dreht sich der Rotor 12 durch eine azimutale Drehung in den Wind. Hierdurch kann Leistung von dem Generator erzeugt werden und in ein Verbrauchernetz abgegeben werden.

Die Windenergieanlage 10 umfasst ferner eine schematisch dargestellte Betriebsführung 16, die in elektronischen Steuerkomponenten in der Gondel 15 oder auch im Turm oder im Turmfuß verwirklicht sind. Die Betriebsführung umfasst eine Blattsteuerung 17, die ihrerseits wiederum eine Einzelblattsteuerung 18 für die Rotorblätter 14 umfasst. Ferner ist eine Überwachungsvorrichtung 19 für das Rotorblattverstellsystem vorgesehen, dass einzeln aufgeführt sein kann oder in der Betriebsführung 16 oder der Blattsteuerung 17 ausgebildet sein kann.

Zur Rotorblattverstellung gibt die Blattsteuerung 17 einen kollektiven Soll-Blattwinkel $\vartheta_c^{set}$ aus, der der momentanen Windstärke und Leistungserzeugung angepasst ist. Die in der Blattsteuerung 17 umfasste Einzelblattsteuerung 18 verarbeitet diesen Soll-Blattwinkel $\vartheta_c^{set}$ und gibt drei individuelle Soll-Einzelblattwinkel $\vartheta_i^{IPC}$ aus, anhand derer die Rotorblätter 14 in ihrem Umlauf verstellt werden. Diese Soll-Einzelblattwinkel $\vartheta_i^{IPC}$ oszillieren um den kollektiven Soll-Blattwinkel $\vartheta_c^{set}$ herum.

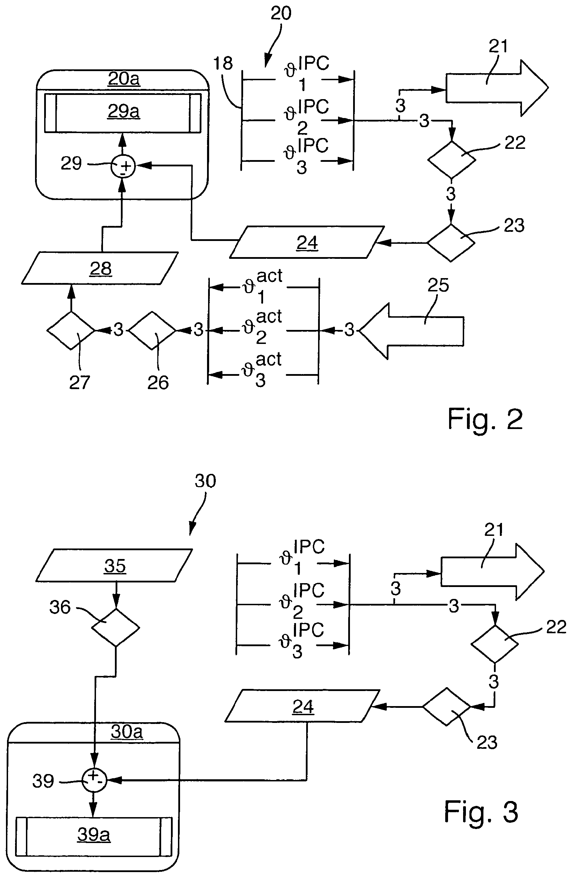

In Fig. 2 ist ein erstes Ausführungsbeispiel eines erfindungsgemäßen Überwachungsschemas 20 schematisch dargestellt. Das Überwachungsschema 20 umfasst eine Statusmeldung 20a, die einen regulären Betrieb des Verstellsystems anzeigen kann oder das Überschreiten eines Grenzwerts für die gezeigte Überwachung.

Zur Durchführung der Überwachung wird zunächst in der Einzelblattsteuerung 18 aus dem kollektiven Soll-Blattwinkel $\vartheta_c^{set}$ der jeweilige Soll-Einzelblattwinkel $\vartheta_1^{IPC}$, $\vartheta_2^{IPC}$, $\vartheta_3^{IPC}$ gebildet und an die Rotornabe 13 weitergeleitet 21. Die Ziffer "3" in dem entsprechenden Pfeil bedeutet in diesem Zusammenhang, dass drei Einzelwerte übergeben werden. Die drei individuellen Soll-Einzelblattwinkel $\vartheta_1^{IPC}$, $\vartheta_2^{IPC}$ und $\vartheta_3^{IPC}$ werden außerdem zeitlich gemittelt 22 und über die zeitlich gemittelten individuellen Soll-Einzelblattwinkel anschließend gemittelt 23, d.h. zu einem kollektiven Soll-Mittelwert

$$\overline{\vartheta^{IPC}} = \frac{\left(\sum_{i=1}^{3} \vartheta_i^{IPC}\right)}{3}.$$

Der kollektive Soll-Mittelwert $\overline{\vartheta^{IPC}}$ wird im Verfahrensschritt 24 anschließend zu einer Differenzbildung 29 geleitet.

Parallel hierzu werden von der Rotornabe 13 bzw. entsprechenden geeigneten Blattwinkelsensoren die drei individuellen Ist-Blattwinkel $\vartheta_1^{act}$, $\vartheta_2^{act}$ und $\vartheta_3^{act}$ ("act" für "actual") im Verfahrensschritt 26 zeitlich gemittelt und im Verfahrensschritt 27 ein Ist-Mittelwert

$$\overline{\vartheta^{act}} = \frac{\left(\sum_{i=1}^{3} \vartheta_i^{act}\right)}{3}$$

aus den drei individuellen zeitlich gemittelten Ist-Blattwinkeln $\vartheta_i^{act}$ gebildet. Dieser Ist-Mittelwert $\overline{\vartheta^{act}}$ wird anschließend im Verfahrensschritt 28 ebenfalls zur Differenzbildung 29 weitergeleitet.

In der Differenzbildung 29 wird die Differenz aus dem kollektiven IPC-Soll-Mittelwert $\overline{\vartheta^{IPC}}$ und dem kollektiven Ist-Mittelwert $\overline{\vartheta^{act}}$ gebildet und geprüft 29a. Dieses Differenzsignal aus der Differenzbildung 29 wird bei der Prüfung 29a mit einem Grenzwert verglichen, insbesondere wird der Betrag des Differenzsignals mit dem Grenzwert verglichen und es wird bei Überschreiten des Grenzwerts die Statusmeldung 20a dahingehend geändert, dass ein Fehler im Verstellsystem angezeigt wird. Dies kann zu einer Lastreduktion oder zum Stillsetzen der Windenergieanlage führen.

In Fig. 3 ist ein alternatives Überwachungsschema 30 dargestellt, das auch zusammen mit dem Überwachungsschema 20 bzw. zusätzlich dazu verwendet werden kann. Ein Teil betrifft die bereits aus Fig. 2 bekannte Bildung des IPC-Soll-Mittelwerts $\overline{\vartheta^{IPC}}$ aus den individuellen IPC-Soll-Blattwinkeln $\vartheta_1^{IPC}$, $\vartheta_2^{IPC}$ und $\vartheta_3^{IPC}$. Dieser IPC-Soll-Mittelwert $\overline{\vartheta^{IPC}}$ wird an einer Differenzbildung 39 weitergeleitet.

Der zweite Wert, der der Differenzbildung 39 zugeführt wird, ist der kollektive Blattwinkel-Sollwert $\vartheta_c^{set}$ im Verfahrensschritt 35, der im Verfahrensschritt 36 zeitlich gemittelt wird und anschließend der Differenzbildung 39 zugeführt wird. Das Differenzsignal, das in der Differenzbildung 39 aus dem kollektiven Blattwinkel-Sollwert $\vartheta_c^{set}$ und dem kollektiven Soll-Mittelwert $\overline{\vartheta^{IPC}}$ aus der Einzelblattsteuerung gebildet wird, wird anschließend geprüft 39a und bei Überschreiten eines entsprechenden Grenzwertes die Statusmeldung 30a dahingehend geändert, dass ein Fehler in der Einzelblattsteuerung vorliegt. Auf diese Weise wird die Funktion des IPC-Reglers überwacht.

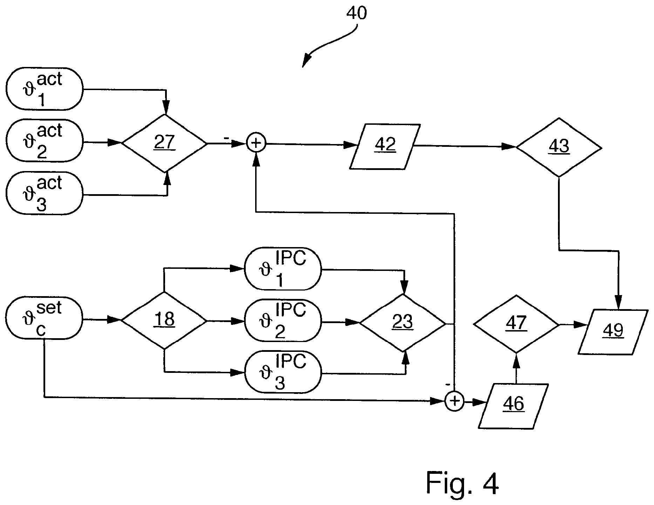

Bei einem dritten Ausführungsbeispiel gemäß Fig. 4 werden zwei verschiedene Überwachungen gleichzeitig ausgeführt. Im oberen Zweig werden aus dem individuellen Ist-Blattwinkeln $\vartheta_1^{act}$, $\vartheta_2^{act}$ und $\vartheta_3^{act}$ im Verfahrensschritt 27 ein Mittelwert, nämlich der Ist-Mittelwert $\overline{\vartheta^{act}}$ gebildet und einer Differenzbildung zugeführt. Das zweite Signal, das dieser Differenzbildung zugeführt wird, stammt von dem Verfahrensschritt 23 gebildeten individuellen IPC-Soll-Einzelblattwinkeln $\vartheta_1^{IPC}$, $\vartheta_2^{IPC}$ und $\vartheta_3^{IPC}$, die aus der Einzelblattsteuerung 18 stammen, deren Input der kollektive Soll-Blattwinkel $\vartheta_c^{set}$ war.

Die Differenz aus dem im Verfahrensschritt 23 ermittelten kollektiven IPC-Soll-Mittelwert $\overline{\vartheta^{IPC}}$ und dem kollektiven Ist-Mittelwert $\overline{\vartheta^{act}}$ wird im Verfahrensschritt 42 zeitlich gemittelt und im Verfahrensschritt 43 einer Prüfung unterzogen. Bei Überschreitung eines Grenzwerts durch den Betrag dieses zeitlich gemittelten Differenzsignals wird im Verfahrensschritt 49 die Anlage stillgesetzt oder lastreduziert.

Eine zweite Überprüfung im unteren Bereich des Überwachungsschemas 40 in Fig. 4 erstellt eine Differenz aus dem kollektiven Soll-Blattwinkel $\vartheta_c^{set}$ und dem in dem Verfahrensschritt 23 gebildeten kollektiven IPC-Soll-Mittelwert $\overline{\vartheta^{IPC}}$. Diese Differenz wird im Verfahrensschritt 46 zeitlich gemittelt und der zeitlich gemittelte Wert im Verfahrensschritt 47 geprüft. Die Windenergieanlage 10 wird im Verfahrensschritt 49 stillgesetzt oder lastreduziert, wenn eine der beiden Überwachungen zeigt, dass der Betrag des jeweiligen zeitlich gemittelten Differenzsignals einen Grenzwert überschreitet.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

Bezugszeichenliste

| | |
|---|---|
| 10 | Windenergieanlage |
| 11 | Turm |
| 12 | Rotor |
| 13 | Rotornabe |
| 14 | Rotorblätter |
| 15 | Gondel |
| 16 | Betriebsführung |
| 17 | Blattsteuerung |
| 18 | Einzelblattsteuerung |
| 19 | Überwachungsvorrichtung |
| 20 | Überwachungsschema |
| 20a | Statusmeldung |
| 21 | IPC-Soll-Blattwinkel an Nabe |
| 22 | zeitliche Mittelung der IPC-Soll-Blattwinkel |
| 23 | Mittelwertbildung |
| 24 | Resultat $\overline{\vartheta^{IPC}}$ zur Differenzbildung |
| 25 | Ist-Blattwinkel von Nabe |
| 26 | zeitliche Mittelung der Ist-Blattwinkel |
| 27 | Mittelwertbildung |
| 28 | Resultat $\overline{\vartheta^{act}}$ zur Differenzbildung |
| 29 | Differenzbildung |
| 29a | Prüfung |
| 30 | Überwachungsschema |
| 30a | Statusmeldung |
| 35 | kollektiver Blattwinkel-Sollwert |
| 36 | zeitliche Mittelung |
| 39 | Differenzbildung |
| 39a | Prüfung |
| 40 | Überwachungsschema |
| 42 | zeitliche Mittelung |
| 43 | Prüfung |
| 46 | zeitliche Mittelung |
| 47 | Prüfung |
| 49 | Stillsetzen oder Lastreduzierung |

$\vartheta_i^{act}$      individuelle Ist-Blattwinkel

$\vartheta_i^{IPC}$      individuelle Soll-Einzelblattwinkel aus IPC

$\vartheta_i^{sim}$      individuelle Blattwinkel aus IPC-basierter Simulation

$\overline{\vartheta^{act}}$      kollektiver Ist-Mittelwert

$\overline{\vartheta^{IPC}}$      kollektiver Soll-Mittelwert aus IPC

$\vartheta_c^{set}$      kollektiver Soll-Blattwinkel aus Blattsteuerung

**Patentansprüche**

1. Verfahren zur Überwachung einer Einzelblattverstellung einer Windenergieanlage (10), die einen Turm (11), einen auf dem Turm (11) angeordneten Rotor (12) mit wenigstens zwei individuell blattwinkelverstellbaren Rotorblättern (14) und ein Blattverstellsystem umfasst, wobei das Blattverstellsystem eine Blattsteuerung (17) und Sensoren zur Erfassung von individuellen Ist-Blattwinkeln $\vartheta_i^{act}$ der wenigstens zwei Rotorblätter (14) umfasst, wobei eine Einzelblattsteuerung (18) umfasst ist, die von der Blattsteuerung (17) einen kollektiven Soll-Blattwinkel $\left(\vartheta_c^{set}\right)$ erhält und die wenigstens zwei Rotorblätter (14) mit jeweils individuellen Soll-Blattwinkeln $\left(\vartheta_i^{IPC}\right)$ ansteuert, **dadurch gekennzeichnet, dass** wenigstens ein Differenzsignal durch Differenzbildung zwischen wenigstens zwei untereinander verschiedenen Blattwinkel-Kollektivsignalen $\left(\overline{\vartheta^{act}}, \overline{\vartheta^{IPC}}, \vartheta_c^{set}\right)$ gebildet, die einen Zustand des Kollektivs der Rotorblätter beschreiben, und auf eine betragsmäßige Überschreitung wenigstens eines Grenzwerts hin überwacht wird, wobei das wenigstens eine zu überwachende Differenzsignal und/oder die der Differenzbildung zugrunde liegenden Blattwinkel-Kollektivsignale ($\overline{\vartheta^{act}}$, $\overline{\vartheta^{IPC}}$, $\vartheta_c^{set}$) und/oder die einem oder den Blattwinkel-Kollektivsignalen ($\overline{\vartheta^{act}}$, $\overline{\vartheta^{IPC}}$) zugrunde liegenden individuellen Blattwinkelsignale ($\vartheta_i^{act}$, $\vartheta_i^{IPC}$, $\vartheta_i^{sim}$) zeitlich gemittelt wird oder werden.

2. Verfahren nach Anspruch 1, **dadurch gekennzeichnet, dass** als Blattwinkel-Kollektivsignale ein Ist-Mittelwert ($\overline{\vartheta^{act}}$) der Ist-Blattwinkel ($\vartheta_i^{act}$), ein Soll-Mittelwert ($\overline{\vartheta^{IPC}}$) von einzelblattsteuerungsbasierten individuellen Blattwinkeln ($\vartheta_i^{IPC}$, $\vartheta_i^{sim}$) und/oder der kollektive Soll-Blattwinkel ($\vartheta_c^{set}$) verwendet werden.

3. Verfahren nach Anspruch 2, **dadurch gekennzeichnet, dass** zur Berechnung des Soll-Mittelwerts ($\overline{\vartheta^{IPC}}$) über die individuellen Soll-Blattwinkel ($\vartheta_i^{IPC}$) der Einzelblattsteuerung (18) gemittelt (23) wird und/oder eine Antwort des Blattverstellsystems auf die angeforderten individuellen Soll-Blattwinkel ($\vartheta_i^{IPC}$) simuliert wird und über die simulierten individuellen Blattwinkel ($\vartheta_i^{sim}$) des simulierten Blattverstellsystems gemittelt wird.

4. Verfahren nach einem der Ansprüche 1 bis 3, **dadurch gekennzeichnet, dass** die zeitliche Mittelung oder Mittelungen (22, 26, 36) über eine Mittelungsdauer erfolgt oder erfolgen, die weniger als eine Dauer einer halben Rotorumdrehung beträgt, insbesondere zwischen 0,5 Sekunden und 2 Sekunden.

5. Verfahren nach einem der Ansprüche 1 bis 4, **dadurch gekennzeichnet, dass** der Betrieb der Windenergieanlage (10) lastreduziert oder angehalten (49) wird, wenn das wenigstens eine erzeugte Blattwinkeldifferenzsignal den wenigstens einen Grenzwert betragsmäßig überschreitet.

6. Verfahren nach einem der Ansprüche 1 bis 5, **dadurch gekennzeichnet, dass** ein Differenzsignal aus dem kollektiven Ist-Mittelwert ($\overline{\vartheta^{act}}$) und dem kollektiven Soll-Mittelwert ($\overline{\vartheta^{IPC}}$) erzeugt wird und bei einer betragsmäßigen Überschreitung eines Grenzwerts eine Fehlfunktion eines Blattverstellantriebs oder eines Blattlagers festgestellt wird.

7. Verfahren nach einem der Ansprüche 1 bis 6, **dadurch gekennzeichnet, dass** ein Differenzsignal aus dem kollektiven Soll-Mittelwert ($\overline{\vartheta^{IPC}}$) und dem kollektiven Soll-Blattwinkel ($\vartheta_c^{set}$) erzeugt wird und bei einer betragsmäßigen Überschreitung eines Grenzwerts eine Fehlfunktion der Einzelblattsteuerung festgestellt wird.

8. Verfahren nach einem der Ansprüche 1 bis 7, **dadurch gekennzeichnet, dass** ein Differenzsignal aus dem kollektiven Soll-Blattwinkel ($\vartheta_c^{set}$) und dem kollektiven Ist-Mittelwert ($\overline{\vartheta^{act}}$) erzeugt wird und bei einer betragsmäßigen Überschreitung eines Grenzwerts eine Fehlfunktion der Einzelblattverstellung festgestellt wird.

9. System zur Überwachung einer Einzelblattverstellung einer Windenergieanlage (10), die einen Turm (11), einen auf dem Turm (10) angeordneten Rotor (12) mit wenigstens zwei individuell blattwinkelverstellbaren Rotorblättern (14) und ein Blattverstellsystem umfasst, wobei das Blattverstellsystem eine Blattsteuerung (17) und Blattwinkelsensoren zur Erfassung von individuellen Ist-Blattwinkeln ($\vartheta_i^{act}$) der wenigstens zwei Rotorblätter (14) umfasst, wobei die Blattsteuerung (17) eine Einzelblattsteuerung (18) umfasst, die von der Blattsteuerung (17) einen kollektiven Soll-Blattwinkel ($\vartheta_c^{set}$) erhält und die wenigstens zwei Rotorblätter (14) mit jeweils individuellen Soll-Blattwinkeln ($\vartheta_i^{IPC}$) ansteuert, wobei das System eine Überwachungsvorrichtung (19) aufweist, **dadurch gekennzeichnet, dass** die Überwachungsvorrichtung (19) ausgebildet und eingerichtet ist, wenigstens ein Differenzsignal durch Differenzbildung zwischen wenigstens zwei untereinander verschiedenen Blattwinkel-Kollektivsignalen ($\overline{\vartheta^{act}}$, $\overline{\vartheta^{IPC}}$, $\vartheta_c^{set}$) zu bilden, die einen Zustand des Kollektivs der Rotorblätter beschreiben, und auf eine betragsmäßige Überschreitung wenigstens eines Grenzwerts hin zu überwachen und das wenigstens eine zu überwachende Differenzsignal und/oder die der Differenzbildung zugrunde liegenden Blattwinkel-Kollektivsignale ($\overline{\vartheta^{act}}$, $\overline{\vartheta^{IPC}}$, $\vartheta_c^{set}$) und/oder die einem oder den Blattwinkel-Kollektivsignalen ($\overline{\vartheta^{act}}$, $\overline{\vartheta^{IPC}}$) zugrunde liegenden individuellen Blattwinkelsignale ($\vartheta_i^{act}$, $\vartheta_i^{IPC}$, $\vartheta_i^{sim}$) zeitlich zu mitteln.

10. System nach Anspruch 9, **dadurch gekennzeichnet, dass** die Überwachungsvorrichtung (19) Mittel aufweist, ausgebildet und eingerichtet ist, ein Verfahren nach einem der Ansprüche 1 bis 8 auszuführen.

11. System nach Anspruch 9 oder 10 **dadurch gekennzeichnet, dass** die Überwachungsvorrichtung (19) in eine Betriebsführung (16) oder in das Blattverstellsystem der Windenergieanlage (10) integriert ist.

12. Windenergieanlage (10) mit einem Turm (11), einem auf dem Turm (11) angeordneten Rotor (12) mit wenigstens zwei individuell blattwinkelverstellbaren Rotorblättern (14) und einem Blattverstellsystem, das eine Blattsteuerung (17) und Blattwinkelsensoren zur Erfassung von individuellen Ist-Blattwinkeln $\left(\vartheta_i^{act}\right)$ der wenigstens zwei Rotorblätter (14) umfasst, wobei die Blattsteuerung (17) eine Einzelblattsteuerung (18) umfasst, die von der Blattsteuerung (17) einen kollektiven Soll-Blattwinkel $\left(\vartheta_c^{set}\right)$ erhält und die wenigstens zwei Rotorblätter (14) mit jeweils individuellen Soll-Blattwinkeln $\left(\vartheta_i^{IPC}\right)$ ansteuert, **dadurch gekennzeichnet, dass** die Windenergieanlage ein System zur Überwachung einer Einzelblattverstellung nach einem der Ansprüche 9 bis 11 aufweist.

**Claims**

1. A method of monitoring an individual blade adjustment of a wind energy installation (10), which comprises a tower (11), a rotor (12) arranged on the tower (11) with at least two rotor blades (14), whose blade angle can be adjusted individually, and a blade adjustment system, wherein the blade adjustment system comprises a blade controller (17) and sensors for sensing individual actual blade angles $\left(\vartheta_i^{act}\right)$ of the at least two rotor blades (14), wherein an individual blade controller (18) is comprised, which receives a collective set point blade angle $\left(\vartheta_c^{set}\right)$ from the blade controller (17) and which controls the at least two rotor blades (14) respectively with individual set point blade angles $\left(\vartheta_i^{IPC}\right)$, **characterized in that** at least one difference signal is formed by forming the difference between at least two collective blade angle signals $\left(\overline{\vartheta^{act}}, \overline{\vartheta^{IPC}}, \vartheta_c^{set}\right)$ which are different from each other and which describe a state of the collective of the rotor blades, and is monitored as regards whether at least one threshold is passed in absolute terms, wherein the at least one difference signal to be monitored and/or the collective blade angle signals $\left(\overline{\vartheta^{act}}, \overline{\vartheta^{IPC}}, \vartheta_c^{set}\right)$ which serve as the basis of the forming of the difference, and/or the individual blade angle signals $\left(\vartheta_i^{act}, \vartheta_i^{IPC}, \vartheta_i^{sim}\right)$ which serve as the basis of an or the collective blade angle signals $\left(\overline{\vartheta^{act}}, \overline{\vartheta^{IPC}}\right)$ is or are averaged over time.

2. The method according to claim 1, **characterized in that** an actual average value $\left(\overline{\vartheta^{act}}\right)$ of the actual blade angles $\left(\vartheta_i^{act}\right)$, a set point average value $\left(\overline{\vartheta^{IPC}}\right)$ of individual blade angles $\left(\vartheta_i^{IPC}, \vartheta_i^{sim}\right)$ based on individual blade control, and/or the collective set point blade angle $\left(\vartheta_c^{set}\right)$ are used as collective blade angle signals.

3. The method according to claim 2, **characterized in that** an average is formed (23) of the individual set point blade angles $\left(\vartheta_i^{IPC}\right)$ of the individual blade controller (18) in order to calculate the set point average value $\left(\overline{\vartheta^{IPC}}\right)$ and/or a response of the blade adjustment system to the requested individual set point blade angles $\left(\vartheta_i^{IPC}\right)$ is simulated and an average is formed of the simulated individual blade angles $\left(\vartheta_i^{sim}\right)$ of the simulated blade adjustment system.

4. The method according to any one of the claims 1 to 3, **characterized in that** the forming of the temporal average value or average values (22, 26, 36) is carried out over an averaging duration which is less than a duration of half a rotor rotation, in particular between 0.5 seconds and 2 seconds.

5. The method according to any one of the claims 1 to 4, **characterized in that** the operation of the wind energy installation (10) is reduced as regards its load or is halted (49) when the absolute value of the at least one generated blade angle difference signal passes the at least one threshold value.

6. The method according to any one of the claims 1 to 5, **characterized in that** a difference signal is generated from the collective actual average value $\left(\overline{\vartheta^{act}}\right)$ and the collective set point average value $\left(\overline{\vartheta^{IPC}}\right)$ and a malfunction of a blade adjustment drive or of a blade bearing is determined in case of a threshold value being passed in absolute terms.

7. The method according to any one of the claims 1 to 6, **characterized in that** a difference signal is generated from the collective set point average value $\left(\overline{\vartheta^{IPC}}\right)$ and the collective set point blade angle $\left(\vartheta_c^{set}\right)$ and a malfunction of the individual blade controller is determined in case of a threshold value being passed in absolute terms.

8. The method according to any one of the claims 1 to 7, **characterized in that** a difference signal is generated from the collective set point blade angle $\left(\vartheta_c^{set}\right)$ and the collective actual average value ($\overline{\vartheta^{act}}$) and a malfunction of the individual blade adjustment is determined in case of a threshold value being passed in absolute terms.

9. A system for monitoring an individual blade adjustment of a wind energy installation (10), which comprises a tower (11), a rotor (12) arranged on the tower (10) with at least two rotor blades (14), whose blade angle can be adjusted individually, and a blade adjustment system, wherein the blade adjustment system comprises a blade controller (17) and blade angle sensors for sensing individual actual blade angles $\left(\vartheta_i^{act}\right)$ of the at least two rotor blades (14), wherein the blade controller (17) comprises an individual blade controller (18), which receives a collective set point blade angle $\left(\vartheta_c^{set}\right)$ from the blade controller (17) and which controls the at least two rotor blades (14) respectively with individual set point blade angles $\left(\vartheta_i^{IPC}\right),$ wherein the system comprises a monitoring device (19), **characterized in that** the monitoring device (19) is formed and arranged to form at least one difference signal by forming the difference between at least two collective blade angle signals ($\overline{\vartheta^{act}},\ \overline{\vartheta^{IPC}},\ \vartheta_c^{set}$) which are different from each other and which describe a state of the collective of the rotor blades, and to monitor as regards whether at least one threshold is passed in absolute terms, and to average, over time, the at least one difference signal to be monitored and/or the collective blade angle signals ($\overline{\vartheta^{act}},\ \overline{\vartheta^{IPC}},\ \vartheta_c^{set}$) which form the basis of the forming of the difference, and/or the individual blade angle signals $\left(\vartheta_i^{act},\ \vartheta_i^{IPC},\ \vartheta_i^{sim}\right)$ which form the basis of an or the collective blade angle signals ($\overline{\vartheta^{act}},\ \overline{\vartheta^{IPC}}$).

10. The system according to claim 9, **characterized in that** the monitoring device (19) comprises means which are formed and arranged to carry out a method according to any one of the claims 1 to 8.

11. The system according to claim 9 or 10, **characterized in that** the monitoring device (19) is integrated into an operational control unit (16) or into the blade adjustment system of the wind energy installation (10).

12. A wind energy installation (10), which comprises a tower (11), a rotor (12) arranged on the tower (11) with at least two rotor blades (14), whose blade angle can be adjusted individually, and a blade adjustment system, which comprises a blade controller (17) and blade angle sensors for sensing individual actual blade angles $\left(\vartheta_i^{act}\right)$ of the at least two rotor blades (14), wherein the blade controller (17) comprises an individual blade controller (18), which receives a collective set point blade angle $\left(\vartheta_c^{set}\right)$ from the blade controller (17) and which controls the at least two rotor blades (14) respectively with individual set point blade angles $\left(\vartheta_i^{IPC}\right),$ **characterized in that** the wind energy installation comprises a system for monitoring an individual blade adjustment according to any one of the claims 9 to 11.

**Revendications**

1. Procédé destiné à surveiller le pas individuel des pales d'une éolienne (10) pourvue d'un mât (11), d'un rotor (12) monté sur le mât (11) et comportant au moins deux pales (14) permettant un réglage individuel de l'angle définissant le pas de pale, et d'un système de réglage de pale, le système de réglage de pale comprenant une commande de pale (17) et des capteurs permettant d'enregistrer des angles réels individuels $\vartheta_i^{act}$ des au moins deux pales de rotor (14), ledit système comprenant une commande de pale individuelle (18) laquelle reçoit de la commande de pale (17) un angle de pale théorique collectif $\left(\vartheta_c^{set}\right)$ et amorce les au moins deux pales de rotor (14) selon un angle de pale théorique individuel $\left(\vartheta_i^{IPC}\right),$ **caractérisé en ce qu'**on génère au moins un signal différentiel en établissant la différence entre au moins deux signaux d'angle de pale collectifs ($\overline{\vartheta^{act}},\ \overline{\vartheta^{IPC}},\ \vartheta_c^{set}$) différents les uns des autres et décrivant un état du collectif de pales de rotor, et on surveille ledit signal en ce qui concerne le dépassement du module d'au moins une valeur limite, l'au moins un signal différentiel à surveiller et/ou les signaux d'angle de pale collectifs ($\overline{\vartheta^{act}},\ \overline{\vartheta^{IPC}},\ \vartheta_c^{set}$) à partir desquels la différence est établie et/ou les signaux d'angle de pale individuels $\left(\vartheta_i^{act},\ \vartheta_i^{IPC},\ \vartheta_i^{sim}\right)$ partir desquels les signaux de pale collectifs ($\overline{\vartheta^{act}},\ \overline{\vartheta^{IPC}}$) sont établis, subissent un traitement visant à en obtenir la moyenne dans le temps.

2. Procédé selon la revendication 1, **caractérisé en ce qu'**on utilise comme signaux d'angle de pale collectifs une valeur moyenne réelle ($\overline{\vartheta^{act}}$) des angles de pales réels $(\vartheta_i^{act})$, une valeur moyenne théorique ($\overline{\vartheta^{IPC}}$) d'angles de pale individuels $(\vartheta_i^{IPC}, \vartheta_i^{sim})$, basés sur la commande individuelle des pales et/ou des angles de pale théoriques collectifs $(\vartheta_c^{set})$.

3. Procédé selon la revendication 2, **caractérisé en ce que**, pour calculer la valeur moyenne théorique ($\overline{\vartheta^{IPC}}$), on fait la moyenne des angles de pale théoriques individuels $(\vartheta_i^{IPC})$ de la commande de pale individuelle (18) et/ou on simule une réponse du système de réglage de pale sur l'angle de pale théorique individuel $(\vartheta_i^{IPC})$ demandé et on fait la moyenne des angles de pale théoriques individuels $(\vartheta_i^{IPC})$ du système de réglage de pale simulé.

4. Procédé selon l'une quelconque des revendications 1 à 3, **caractérisé en ce que** la moyenne ou les moyennes dans le temps (22, 26, 36) est ou sont calculées sur une période inférieure à la durée d'un demi-tour de rotor, en particuler est/sont comrpises entre 0,5 et 2 secondes.

5. Procédé selon l'une quelconque des revendications 1 à 4, **caractérisé en ce que** le fonctionnement de l'éolienne (10) est réduit ou arrêté (49) en fonction de la charge si l'au moins un signal différentiel d'angle de pale généré dépasse en valeur l'au moins une valeur limite.

6. Procédé selon l'une quelconque des revendications 1 à 5, **caractérisé en ce qu'**un signal différentiel est généré à partir de la valeur moyenne réelle collective ($\overline{\vartheta^{act}}$) et de la valeur moyenne théorique collective ($\overline{\vartheta^{IPC}}$) et, en cas de dépassement en valeur d'une valeur limite, un dysfonctionnement d'un entraînement de réglage de pale ou d'un palier de pale est constaté.

7. Procédé selon l'une quelconque des revendications 1 à 6, **caractérisé en ce qu'**un signal différentiel est généré à partir d'une valeur moyenne théorique collective ($\overline{\vartheta^{IPC}}$) et de l'angle de pale théorique collectif $(\vartheta_c^{set})$, et en cas de dépassement en valeur d'une valeur limite, un dysfonctionnement d'une commande de pale individuelle est constaté.

8. Procédé selon l'une quelconque des revendications 1 à 7, **caractérisé en ce qu'**un signal différentiel est généré à partir de l'angle de pale théorique collectif $(\vartheta_c^{set})$ et de la valeur moyenne réelle collective ($\overline{\vartheta^{act}}$) et en cas de dépassement en valeur d'une valeur limite, un dysfonctionnement d'un réglage de pale individuel est constaté.

9. Système de surveillance destiné à surveiller le pas individuel des pales d'une éolienne (10) pourvue d'un mât (11), d'un rotor (12) monté sur le mât (10) et comportant au moins deux pales (14) permettant un réglage individuel de l'angle définissant le pas de pale, est un système de réglage de pale, comprenant une commande de pale (17) et des capteurs d'angle de pale pour détecter des angles de pale réels individuels $(\vartheta_i^{act})$ des au moins deux pales de rotor (17), la commande de pale (17) comprenant une commande de pale individuelle, laquelle reçoit de la commande de pale (17) un angle de pale théorique collectif $(\vartheta_c^{set})$ et amorce les au moins deux pales de rotor (14) selon des angles de pale individuels $(\vartheta_i^{IPC})$, le système présentant un système de surveillance (19), **caractérisé en ce que** le système de surveillance (19) est configuré et aménagé pour former au moins un signal différentiel en établissant la différence entre au moins deux signaux d'angle de pale collectifs ($\overline{\vartheta^{act}}, \overline{\vartheta^{IPC}}, \vartheta_c^{set}$) différents les uns des autres et décrivant un état du collectif de pales de rotor, et pour surveiller ledit signal en ce qui concerne le dépassement du module d'au moins une valeur limite, l'au moins un signal différentiel à surveiller et/ou les signaux d'angle de pale collectifs ($\overline{\vartheta^{act}}, \overline{\vartheta^{IPC}}, \vartheta_c^{set}$) à partir desquels la différence est établie et/ou les signaux d'angle de pale individuels $(\vartheta_i^{act}, \vartheta_i^{IPC}, \vartheta_i^{sim})$ à partir desquels les signaux de pale collectifs ($\overline{\vartheta^{act}}, \overline{\vartheta^{IPC}}$) sont établis, subissent un traitement visant à en obtenir la moyenne dans le temps.

10. Système selon la revendication 9, **caractérisé en ce que** le dispositif de surveillance (19) présente des moyens, est configuré et aménagé pour réaliser un procédé selon l'une quelconque des revendications 1 à 8.

11. Système selon la revendication 9 ou la revendication 10, **caractérisé en ce que** le dispositif de surveillance (19) est intégré dans une glissière de service (16) ou dans le système de réglage de pale de l'éolienne (10).

12. Eolienne (10) comprenant un mât (11), un rotor (12) monté sur le mât (11), lequel rotor comporte au moins deux pales de rotor (14) permettant un réglage individuel de l'angle définissant le pas de pale, et un système de réglage de pale comprenant une commande de pale (17) et des capteurs permettant d'enregistrer des angles réels individuels $(\vartheta_i^{act})$ des au moins deux pales de rotor (14), ledit système comprenant une commande de pale individuelle (18), laquelle reçoit de la commande de pale (17) un angle de pale théorique collectif $(\vartheta_c^{set})$ et amorce les au moins deux pales de rotor (14) selon un angle de pale théorique individuel $(\vartheta_i^{IPC})$, **caractérisé en ce que** l'éolienne présente un système destiné à surveiller le pas individuel selon l'une quelconque des revendication 9 à 11.

EP 2 984 335 B1

19

17 18 16

15
13
14
12
14
14

11

10

Fig. 1

12

Fig. 2

Fig. 3

Fig. 4

EP 2 984 335 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110158805 A1
- DE 102009022236 A1